# EUROPÄISCHE PATENTSCHRIFT

(11) **EP 1 162 108 B1**
(45) Veröffentlichungstag und Bekanntmachung des Hinweises auf die Patenterteilung: **13.10.2004**
(21) Anmeldenummer: 01112214.0
(22) Anmeldetag: 18.05.2001
(51) Int. Cl.: B60N 2/44, A61G 3/00

(54) **Fahrzeugsitz mit Einstiegs- und Ausstiegshilfe**
Vehicle seat for assisting a person getting on and off
Siège avec aide pour accéder au siège ou à s'extraire de ce siège

(30) Priorität: 08.06.2000 DE 10028341
(43) Veröffentlichungstag der Anmeldung: 12.12.2001
(73) Patentinhaber: KEIPER GmbH & Co. KG, 67657 Kaiserslautern (DE)
(72) Erfinder: Rölle, Alexander, 67725 Börrstadt (DE); Weissgerber, Werner, 67759 Reichsthal (DE); Malucha, Gerd, 67655 Kaiserslautern (DE); Strauss, Volker, 67316 Carlsberg (DE); Zirkel, Joachim, 67706 Krickenbach (DE)
(74) Vertreter: Patentanwälte Hosenthien-Held und Dr. Held

(56) Entgegenhaltungen:
- EP-A- 0 328 137
- EP-A- 0 670 240
- DE-A- 3 643 876
- PATENT ABSTRACTS OF JAPAN vol. 017, no. 397 (M-1452), 26. Juli 1993 (1993-07-26) -& JP 05 077667 A (DELTA KOGYO CO LTD), 30. März 1993 (1993-03-30)
- PATENT ABSTRACTS OF JAPAN vol. 007, no. 044 (M-195), 22. Februar 1983 (1983-02-22) -& JP 57 194119 A (IKEDA BUTSUSAN KK), 29. November 1982 (1982-11-29)
- PATENT ABSTRACTS OF JAPAN vol. 009, no. 098 (M-375), 27. April 1985 (1985-04-27) -& JP 59 223527 A (HONDA GIKEN KOGYO KK), 15. Dezember 1984 (1984-12-15)
- PATENT ABSTRACTS OF JAPAN vol. 1998, no. 03, 27. Februar 1998 (1998-02-27) -& JP 09 290669 A (ARACO CORP), 11. November 1997 (1997-11-11)

## Beschreibung

Die Erfindung betrifft einen Fahrzeugsitz, insbesondere einen Kraftfahrzeugsitz, mit den Merkmalen des Oberbegriffs des Anspruches 1.

Bei einem aus der DE 36 43 876 A1 oder der EP 0 670 240 A1 bekannten Fahrzeugsitz können die Seitenwangen, welche an der gleichen Stelle in Längsrichtung nach oben über die Mittelbahn überstehen, zum Einsteigen oder Aussteigen nach unten abgeklappt werden. Die Sitzbenutzer können dann ihre Beine leichter über die Seitenwangen hinweg heben, was den Sitzkomfort erhöht. In der JP 05-077667 A ist ein Fahrzeugsitz der eingangs genannten Art offenbart, bei dem aus dem gleichen Grund die Mittelbahn angehoben werden kann. Bei einer solchen Lösung wird weniger Bauraum für den Fahrzeugsitz und kein zusätzlicher freier Raum seitlich oder unterhalb der Seitenwangen benötigt. Dem Sitzbenutzer, insbesondere einem gehandikapten Sitzbenutzer, beispielsweise mit Wirbelsäulenproblemen, steht dann eine kombinierte Einstiegs- und Ausstiegshilfe zur Verfügung, mit der er die Seitenwangen und den Türschweller leicht überwinden kann. Insbesondere beim Ausstieg, der aufgrund der tiefen Ausgangslage des Hüftpunktes und der leicht nach oben geneigten Sitzfläche für den Benutzer größere Anstrengungen erfordert, ist das Anheben der Mittelbahn hilfreicher als das Abklappen der Seitenwangen. Auch in konstruktiver Hinsicht ist eine Bewegung der Mittelbahn einfacher als eine Bewegung der Seitenwangen.

Fahrzeugsitze mit anhebbaren oder absenkbaren Mittelbahnen oder Teilen davon sind beispielsweise aus der JP 59-223527 A, welche eine Neigungsänderung anstrebt, oder der JP 09-290669 A bekannt, welche dadurch einen integrierten Kindersitz realisiert. In der EP 0 328 137 A2 und der JP 57-194119 A sind Lösungen zur Wölbung der Mittelbahn und der daran angeformten Seitenwangen aufgezeigt. In der letztgenannten Druckschrift erfolgt dies durch zwei nebeneinander angeordnete Luftkissen, welche unterhalb mehrerer elastischer Drähte angeordnet sind, auf denen die Mittelbahn aufliegt.

Der Erfindung liegt die Aufgabe zu Grunde, einen Fahrzeugsitz der eingangs genannten Art zu verbessern, insbesondere noch benutzerfreundlicher zu gestalten. Diese Aufgabe wird erfingdungsgemäß durch einen Fahrzeugsitz mit den Merkmalen des Anspruches 1 gelöst. Vorteilhafte Ausgestaltungen sind Gegenstand der Unteransprüche.

Die Höhenbewegung der Mittelbahn erfolgt pneumatisch, d.h. durch wenigstens ein aufblasbares Luftkissen, welches unterhalb der Mittelbahn angeordnet ist, was technisch leicht zu realisieren und damit kostengünstig herzustellen ist. Um ein seitliches Ausweichen der vom Luftkissen umschlossenen Luft bei der seitlich gerichteten Einstiegs- oder Ausstiegsbewegung zu verhindern, sind vorzugsweise zwei Luftkissen vorgesehen, welche sich in Längsrichtung erstrecken und in Querrichtung nebeneinander angeordnet sind. Zwischen den Luftkissen und der Mittelbahn ist eine Druckplatte (oder ein anderer Träger für die Mittelbahn) vorgesehen, welche den Druck der Luftkissen gleichmäßig auf das die Mittelbahn bildende Polsterstück überträgt, so daß keine punktuellen Verformungen entstehen und die Mittelbahn als Ganzes bewegt werden kann.

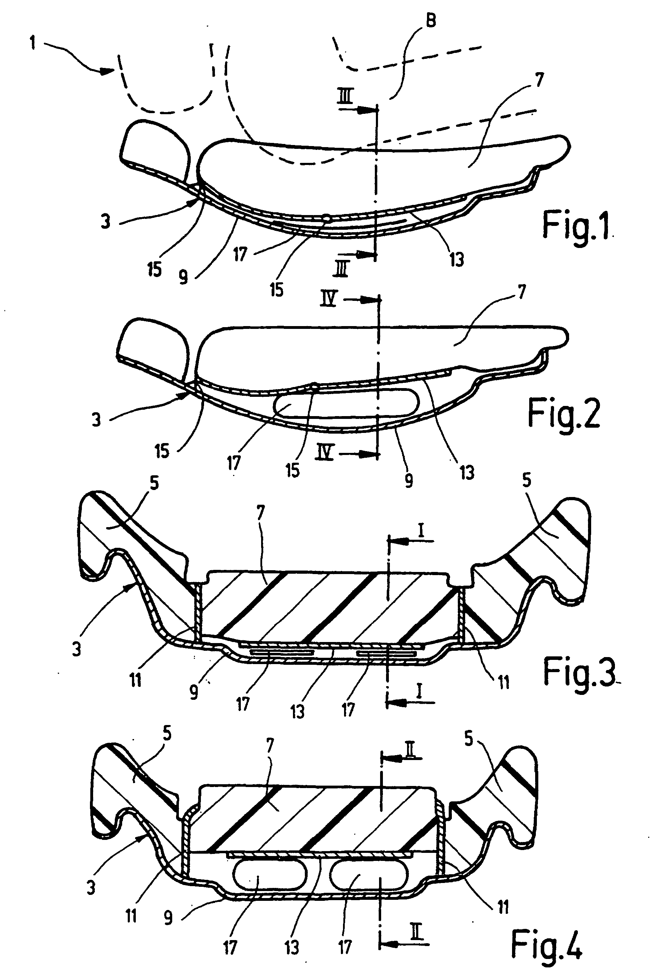

Im folgenden ist die Erfindung anhand eines in der Zeichnung dargestellten Ausführungsbeispiels näher erläutert. Es zeigen
- Fig. 1: einen Längsschnitt durch das Ausführungsbeispiel im Gebrauchszustand entlang der Linie I - I in Fig. 3,
- Fig. 2: einen Längsschnitt durch das Ausführungsbeispiel im Einstiegs-/Ausstiegs-Zustand entlang der Linie II - II in Fig. 4,
- Fig. 3: einen Querschnitt durch das Ausführungsbeispiel im Gebrauchszustand entlang der Linie III - III in Fig. 1, und
- Fig. 4: einen Querschnitt durch das Ausführungsbeispiel im Einstiegs-/Ausstiegs-Zustand entlang der Linie IV - IV in Fig. 2.

Bei einem Fahrzeugsitz 1 für ein Kraftfahrzeug, insbesondere einem Vordersitz, weist das Sitzteil 3 zwei in Längsrichtung des Fahrzeugsitzes 1 verlaufende Seitenwangen 5 und eine zwischen den Seitenwangen 5 angeordnete Mittelbahn 7 auf. Die nach oben weisenden Flächen der Seitenwangen 5 und der Mittelbahn 7 definieren gemeinsam die Sitzfläche. Die Seitenwangen 5 dienen der seitlichen Abstützung der Oberschenkel eines Benutzers B des Fahrzeugsitzes 1. Dabei sind im Gebrauchszustand des Fahrzeugsitzes 1 die Oberkanten der Seitenwangen 5 über den größten Teil ihrer Länge hinweg etwas höher gelegen als die Oberseite der Mittelbahn 7 an der gleichen Stelle in Längsrichtung oder benachbarten Stellen, d.h. das Sitzteil 3 weist ein näherungsweise U-förmiges Profil auf.

Die Seitenwangen 5 und die Mittelbahn 7 des Sitzteiles 3 sind als getrennte Polsterstücke ausgebildet, welche mit einem eigenen Bezug überzogen sind und auf einer gemeinsamen Sitzschale 9 angeordnet sind, wobei die Seitenwangen 5 direkt an der Sitzschale 9 befestigt sind. Die Grenzfläche zwischen je einer Seitenwange 5 und der Mittelbahn 7 verläuft in vertikaler Richtung und in Längsrichtung des Fahrzeugsitzes 1, wobei die Mittelbahn 7 meist etwas länger als die Seitenwangen 5 ausgebildet ist. Diese Grenzflächen sind als Gleitflächen mit guten Gleiteigenschaften ausgebildet, beispielsweise durch entsprechende Materialbeschaffenheiten. In der Ebene jeder Grenzfläche ist ein elastisches Band 11 angeordnet, welches sich über die gesamte Länge der Seitenwange 5 erstreckt. Das elastische Band 11 ist im Ausführungsbeispiel im wesentlichen über die gesamte Länge sowohl mit der Mittelbahn 7 als auch mit der Sitzschale 9 verbunden, vorzugsweise vernäht oder verklebt. Genausogut kann das elastische Band 11 wahlweise nur abschnittsweise verbunden sein, nur abschnittsweise vorhanden sein, oder mit dem unteren Rand der Seitenwange 5 verbunden sein.

Zwischen der Unterseite der Mittelbahn 7 und der Sitzschale 9 ist eine mehrgliedrige, vorzugsweise zweiteilige Druckplatte 13 vorgesehen. Die weitgehend starren Glieder der Druckplatte 13 sind durch Scharniere 15, deren Schwenkachse horizontal in Querrichtung verläuft, untereinander gelenkig verbunden und am hinteren Ende der Druckplatte 13 an der Sitzschale 9 angelenkt. Zwischen der Druckplatte 13 und der Sitzschale 9 sind zwei aufblasbare Luftkissen 17 vorgesehen, welche sich in Längsrichtung erstrecken und in Querrichtung nebeneinander angeordnet sind.

Möchte ein Benutzer B, beispielsweise mit Wirbelsäulen- oder sonstigen Gelenkproblemen, in das Kraftfahrzeug einsteigen oder aus diesem aussteigen, so werden die beiden Luftkissen 17 aufgeblasen, vorzugsweise mit Druckluft beaufschlagt. Aufgrund des steigenden Volumens der Luftkissen 17 wird die Druckplatte 13 angehoben, welche den Druck auf die Mittelbahn 7 überträgt und dadurch diese anhebt. Während in Querrichtung die Mittelbahn 7 vorzugsweise gleichmäßig angehoben wird, erfolgt in Längsrichtung das Anheben mehr im vorderen Bereich aufgrund der Anlenkung der Druckplatte 13 am hinteren Teil des Sitzschale 9. So kann der Höhenunterschied zwischen den Seitenwangen 5 und der Mittelbahn 7 ausgeglichen werden, der in der Regel im vorderen Bereich des Sitzteiles 3 etwas größer ist, und zugleich die gesamte Mittelbahn 7 etwas angehoben werden.

Der Benutzer B kann dann in diesem Einstiegs-/Ausstiegs-Zustand des Fahrzeugsitzes 1 beim Einsteigen sich leichter auf den Fahrzeugsitz 1 setzen und beim Aussteigen seine Beine besser über die Seitenwangen 5 und den Türschweller hinweg schwenken. Zur Rückkehr in den Gebrauchszustand des Fahrzeugsitzes 1 wird die Luft wieder aus den Luftkissen 17 abgelassen, wobei die Luftkissen 17 durch die elastischen Bänder 11 entleert werden, so daß die Mittelbahn 7 absinkt und die Luftkissen 17 sich flach zusammenlegen. Die Mittelbahn 7 kann so steuerbar sein, daß die Anhebhöhe der Mittelbahn 7 auf einen bestimmten Benutzer B einstellbar ist.

### Bezugszeichenliste

- 1: Fahrzeugsitz
- 3: Sitzteil
- 5: Seitenwange
- 7: Mittelbahn
- 9: Sitzschale
- 11: elastisches Band
- 13: Druckplatte
- 15: Scharnier
- 17: Luftkissen.
- B: Benutzer

## Patentansprüche

1. Fahrzeugsitz, insbesondere Kraftfahrzeugsitz, mit einer Sitzfläche, die durch wenigstens zwei Seitenwangen (5) und wenigstens eine Mittelbahn (7) definiert ist, wobei in einem Gebrauchszustand des Fahrzeugsitzes (1) eine Höhendifferenz zwischen den Oberkanten der Seitenwangen (5) und der Mittelbahn (7) besteht, und wobei in einem Einstiegs-/Ausstiegs-Zustand des Fahrzeugsitzes (1) die Höhendifferenz geringer ist, indem zum Übergang in den Einstiegs-/ Ausstiegs-Zustand die Mittelbahn (7) relativ zu den Seitenwangen (5) anhebbar und bei der Rückkehr in den Gebrauchszustand absenkbar ist, **dadurch gekennzeichnet, daß** die Höhenbewegung der Mittelbahn (7) durch wenigstens ein aufblasbares Luftkissen (17) erfolgt, das unterhalb der Mittelbahn (7) angeordnet ist, wobei zwischen Luftkissen (17) und Mittelbahn (7) eine Druckplatte (13) vorgesehen ist.

2. Fahrzeugsitz nach Anspruch 1, **dadurch gekennzeichnet, daß** die Höhenbewegung der Mittelbahn (7) durch zwei aufblasbare Luftkissen (17) erfolgt, welche sich in Längsrichtung erstrecken und in Querrichtung nebeneinander angeordnet sind.

3. Fahrzeugsitz nach Anspruch 1 oder 2, **dadurch gekennzeichnet, daß** die Druckplatte (13) an einer Sitzschale (9) angelenkt ist, welche wenigstens teilweise unterhalb des oder der Luftkissen (17) vorgesehen ist.

4. Fahrzeugsitz nach einem der Ansprüche 1 bis 3, **dadurch gekennzeichnet, daß** die Druckplatte (13) wenigstens zwei Glieder und wenigstens zwei Scharniere (15) aufweist.

5. Fahrzeugsitz nach einem der Ansprüche 1 bis 4, **dadurch gekennzeichnet, daß** zwischen der Mittelbahn (7) und jeder Seitenwange (5) je ein elastisches Band (11) vorgesehen ist.

## Claims

1. A vehicle seat, especially a motor vehicle seat, having a seat surface that is defined by at least two lateral bolsters (5) and at least one central squab (7), wherein, in a state of use of the vehicle seat (1), there is a height difference between the top edges of the lateral bolsters (5) and the central squab (7), and wherein, in a boarding/alighting state of the vehicle seat (1), the height difference is smaller, in that for the transition into the boarding/alighting state the central squab (7) can be raised relative to the lateral bolsters (5) and can be lowered on return to the state of use, **characterised in that** the vertical movement of the central squab (7) is effected by at least one inflatable air cushion (17) that is arranged beneath the central squab (7), a pressure plate (13) being provided between air cushion (17) and central squab (7).

2. A vehicle seat according to claim 1, **characterised in that** the vertical movement of the central squab (7) is effected by two inflatable air cushions (17) that extend in the longitudinal direction and are arranged side by side in the transverse direction.

3. A vehicle seat according to claim 1 or 2, **characterised in that** the pressure plate (13) is articulated on a seat shell (9) that is provided at least partially beneath the air cushion or cushions (17).

4. A vehicle seat according to any one of claims 1 to 3, **characterised in that** the pressure plate (13) comprises at least two members and at least two hinges.

5. A vehicle seat according to any one of claims 1 to 4, **characterised in that** a resilient band (11) is provided between the central squab (7) and each lateral bolster (5).

## Revendications

1. Siège de véhicule, en particulier siège de véhicule automobile, comprenant une surface d'assise qui est définie par au moins deux joues latérales (5) et au moins une bande centrale (7), dans lequel, dans un état d'utilisation du siège de véhicule (1), il existe une dénivelée entre les bords supérieurs des joues latérales (5) et la bande centrale (7), et dans lequel, dans un état de montée/descente du siège de véhicule (1), la dénivelée est plus petite par le fait que la bande centrale (7) peut être surélevée par rapport aux joues latérales (5) pour le passage à l'état de montée/descente et qu'elle peut être abaissée lors du retour à l'état d'utilisation, **caractérisé par le fait que** le mouvement en hauteur de la bande centrale (7) est réalisé par au moins un coussin d'air gonflable (17) qui est disposé au-dessous de la bande centrale (7), une plaque de pression (13) étant prévue entre le coussin d'air (17) et la bande centrale (7).

2. Siège de véhicule selon la revendication 1, **caractérisé par le fait que** le déplacement en hauteur de la bande centrale (7) est réalisé par deux coussins d'air gonflables (17) qui s'étendent dans la direction longitudinale et sont disposés l'un à côté de l'autre dans la direction transversale.

3. Siège de véhicule selon l'une des revendications 1 ou 2, **caractérisé par le fait que** la plaque de pression (13) est articulée à une coquille de siège (9) qui est prévue au moins partiellement au-dessous du ou des coussins d'air (17).

4. Siège de véhicule selon l'une des revendications 1 à 3, **caractérisé par le fait que** la plaque de pression (13) présente au moins trois éléments et au moins deux charnières (15).

5. Siège de véhicule selon l'une des revendications 1 à 4, **caractérisé par le fait qu'**il est prévu une bande élastique (11) entre la bande centrale (7) et chaque joue latérale (5).
